# EUROPEAN PATENT APPLICATION

(11) **EP 4 726 956 A1**
(43) Date of publication of application: **15.04.2026**
(21) Application number: 25204375.7
(22) Date of filing: 24.09.2025
(51) Int. Cl.: H02J 7/00, G06F 1/28, H02J 7/96, G06F 1/3212, G06F 1/3228, G06F 1/3296, G06F 1/26, H02J 7/84

(54) **INFORMATION PROCESSING APPARATUS AND CHARGING METHOD**

(30) Priority: 08.10.2024 JP 2024176482
(71) Applicant: Lenovo (Singapore) Pte. Ltd., New Tech Park 556741 (SG)
(72) Inventor: NAKABAYASHI, Mao, Yokohama-shi, 220-0012 (JP); NAKAMURA, Atsunobu, Yokohama-shi, 220-0012 (JP); KOIDE, Taiki, Yokohama-shi, 220-0012 (JP)
(74) Representative: Openshaw & Co.

(57) **Abstract**

To efficiently charge a battery, an information processing apparatus includes: a power supply control unit that controls an amount of power supplied from an AC adapter; a power unit that generates power supplied to a secondary battery and a system load based on the power supplied from the AC adapter; and a processor that, when charging the secondary battery, monitors a value of system power supplied to the system load and a voltage value of the secondary battery, and instructs the power supply control unit of the amount of power supplied from the AC adapter based on the value of the system power and a value of charging power predetermined according to the voltage value of the secondary battery, to control a current value for charging the secondary battery.

## Description

### BACKGROUND OF THE INVENTION

### Field of the Invention

The present invention relates to an information processing apparatus and a charging method.

### Description of the Related Art

An information processing apparatus that is portable, such as a laptop or tablet personal computer, is typically equipped with a battery and, when an AC adapter is connected, can charge the battery with power supplied from the AC adapter. The information processing apparatus can not only operate on system power generated from power supplied from the battery, but also operate on system power generated from the AC adapter concurrently with charging of the battery when the AC adapter is connected.

[Patent Document 1] Japanese Unexamined Patent Application Publication No. 2003-295980

### SUMMARY OF THE INVENTION

Conventionally, when the battery is charged with power supplied from the AC adapter, the remaining capacity of the battery is monitored to control the charging current. However, if the system load varies during charging of the battery, power loss that occurs when generating system power varies. As a result, power conversion efficiency may decrease depending on the remaining capacity of the battery.

In view of the above circumstances, the present invention has an object of providing an information processing apparatus and a charging method that are capable of efficiently charging a battery.

To solve the problem stated above, an information processing apparatus according to a first aspect of the present invention includes: a power supply control unit that controls an amount of power supplied from an AC adapter; a power unit that generates power supplied to a secondary battery and a system load based on the power supplied from the AC adapter; and a processor that, when charging the secondary battery, monitors a value of system power supplied to the system load and a voltage value of the secondary battery, and instructs (i.e. notifies) the power supply control unit of the amount of power supplied from the AC adapter based on the value of the system power and a value of charging power predetermined according to the voltage value of the secondary battery, to control a current value for charging the secondary battery.

In the information processing apparatus, a target value of charging current may be preset for each of a plurality of voltage values depending on a degree of charging of the secondary battery, and the value of the charging power predetermined according to the voltage value of the secondary battery may be calculated based on the target value of the charging current preset for each of the plurality of voltage values.

In the information processing apparatus, when charging the secondary battery, the processor may instruct the power supply control unit of the amount of power supplied from the AC adapter based on a sum of the value of the system power and the value of the charging power predetermined according to the voltage value of the secondary battery.

In the information processing apparatus, in a case where the sum of the value of the system power and the value of the charging power predetermined according to the voltage value of the secondary battery exceeds a maximum amount of power suppliable from the AC adapter, the processor may instruct the power supply control unit to cause the amount of power supplied from the AC adapter to be the maximum amount.

In the information processing apparatus, the processor may switch between a first charging mode in which the current value for charging the secondary battery is controlled by monitoring the value of the system power and the voltage value of the secondary battery and a second charging mode in which the current value for charging the secondary battery is controlled by monitoring the voltage value of the secondary battery without using the value of the system power, based on an operation of a user on a user interface (UI) that allows switching between the first charging mode and the second charging mode.

In the information processing apparatus, the system load may include a load of processing executed by an operating system (OS) or a program running on the OS.

A charging method according to a second aspect of the present invention is a charging method for a secondary battery in an information processing apparatus that includes: a power supply control unit that controls an amount of power supplied from an AC adapter; and a power unit that generates power supplied to the secondary battery and a system load based on the power supplied from the AC adapter, the charging method including the following steps executed by a processor: when charging the secondary battery, monitoring a value of system power supplied to the system load and a voltage value of the secondary battery; and instructing the power supply control unit of the amount of power supplied from the AC adapter based on the value of the system power and a value of charging power predetermined according to the voltage value of the secondary battery, to control a current value for charging the secondary battery.

The above-described aspects of the present invention can efficiently charge a battery.

### BRIEF DESCRIPTION OF THE DRAWINGS

FIG. 1 is an external view illustrating an example of the structure of an information processing apparatus according to an embodiment.
FIG. 2 is a graph illustrating an example of the relationship between charging current and power conversion efficiency.
FIG. 3 is a diagram for explaining an example of conventional charging current control when the system load varies.
FIG. 4 is a diagram for explaining an example of charging current control according to the embodiment.
FIG. 5 is a schematic block diagram illustrating an example of the hardware structure of the information processing apparatus according to the embodiment.
FIG. 6 is a block diagram illustrating an example of a structure related to charging control in the information processing apparatus according to the embodiment.
FIG. 7 is a flowchart illustrating an example of a charging control process in a high-efficiency charging mode according to the embodiment.

### DETAILED DESCRIPTION OF THE INVENTION

An embodiment of the present invention will be described below with reference to the drawings.

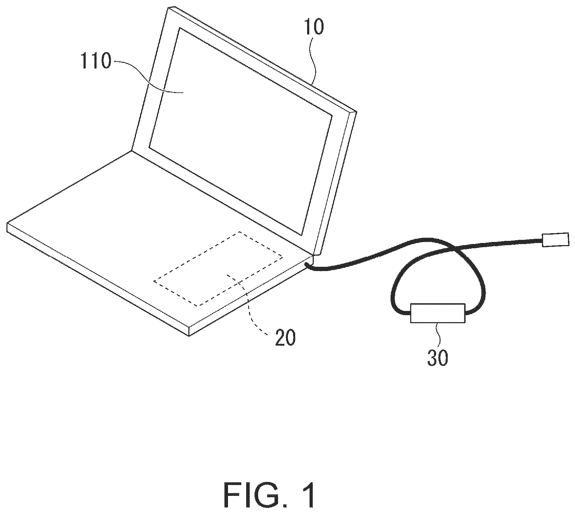

First, an outline of an information processing apparatus according to this embodiment will be described with reference to FIG. 1.

FIG. 1 is an external view illustrating an example of the structure of the information processing apparatus according to this embodiment.

An information processing apparatus 10 illustrated in the drawing is a clamshell (laptop) personal computer (PC). Alternatively, the information processing apparatus 10 may be a tablet PC, a smartphone, or the like. The information processing apparatus 10 includes a battery 20. An AC adapter 30 is connected to the information processing apparatus 10. The AC adapter 30 converts commercial alternating current (AC) power into direct current (DC) power to be input to the information processing apparatus 10.

The battery 20 is a secondary battery for supplying power to the information processing apparatus 10, and can be repeatedly used by being charged by the AC adapter 30. An example of the battery 20 is a lithium-ion battery. The battery 20 may be chargeable not only by the AC adapter 30 but also by a charger. The information processing apparatus 10 can operate on power supplied from the AC adapter 30 or on power supplied from the battery 20.

The information processing apparatus 10 generates power supplied to the battery 20 and a system load, based on power supplied from the AC adapter 30. The system load is a load that consumes power in system processing executed by a central processing unit (CPU) and the like in the information processing apparatus 10 according to an operating system (OS) and programs running on the OS. The system load varies depending on the operating state of the system, and decreases when the system is on standby in an idle state, for example.

The battery 20 is charged with power supplied from the AC adapter 30. While the charging time is shorter when the charging current during charging of the battery 20 is larger, the range of charging current in which power conversion efficiency is high is narrow, and the efficiency decreases when the charging current is large or small.

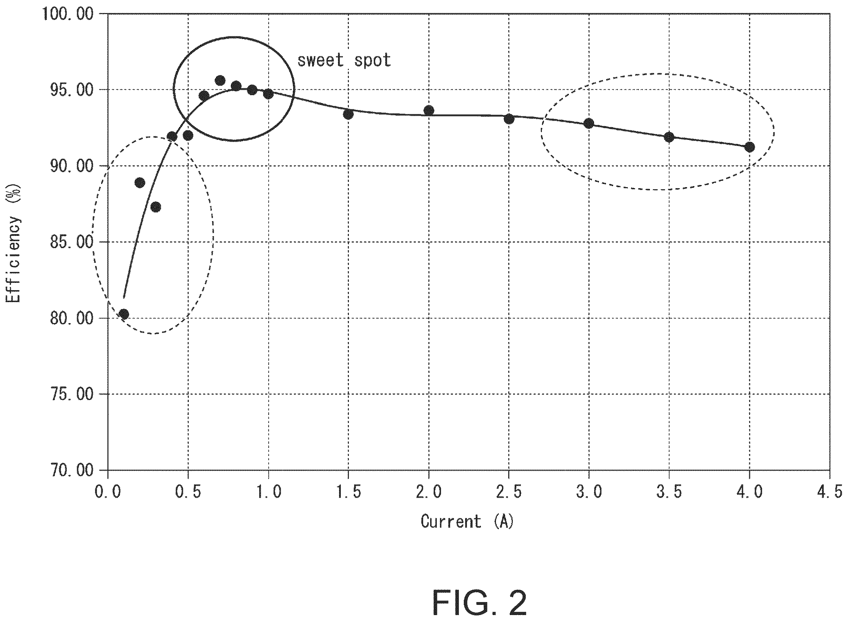

FIG. 2 is a graph illustrating an example of the relationship between charging current and power conversion efficiency. In the drawing, the horizontal axis represents charging current (Current (A)), and the vertical axis represents power conversion efficiency (Efficiency (%)). As illustrated, an optimal range (Sweet spot) where power conversion efficiency is high is only a limited range as indicated by a solid-line circle (for example, about 0.5 A to 1.0 A). If the charging current is larger or smaller outside the optimal range, power conversion efficiency decreases (i.e. charging efficiency decreases), as indicated by dashed-line circles.

Conventional charging control will be described. Conventionally, when the battery 20 is charged with power supplied from the AC adapter 30, the remaining capacity of the battery 20 is monitored to control the charging current. However, if the system load varies during charging of the battery, power loss that occurs when generating system power varies. As a result, power conversion efficiency may decrease depending on the remaining capacity of the battery 20.

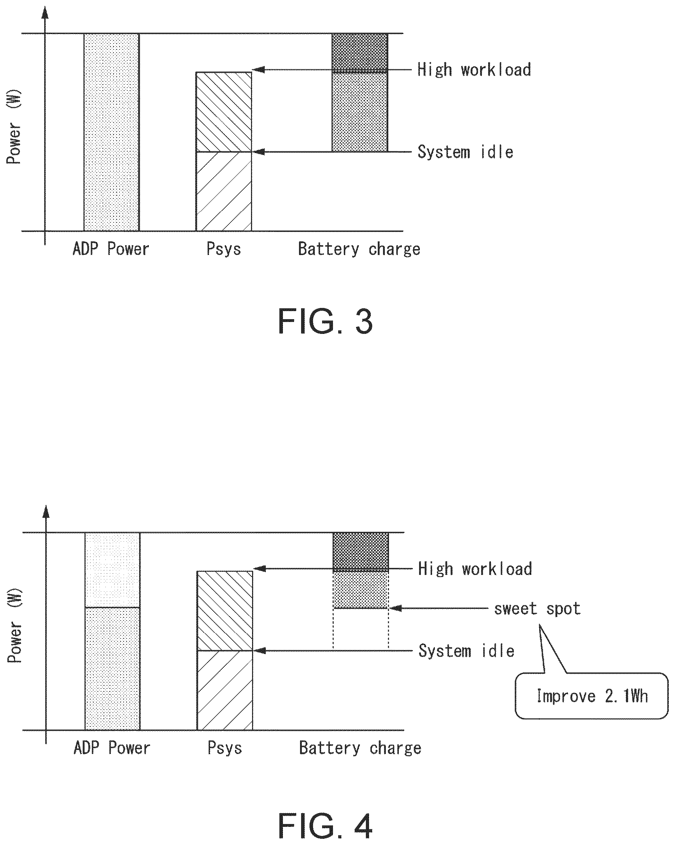

FIG. 3 is a diagram illustrating an example of conventional charging current control when the system load varies. The drawing illustrates the relationship among the respective power values (Power (W)) of power supplied from the AC adapter 30 (ADP Power), system power consumed by the system load (Psys), and charging power for charging the battery 20 (Battery charge).

In the conventional charging control, variation of the system load is not taken into consideration. When the system is in an idle state (System idle), since the system load is small, the power supplied from the AC adapter 30 is used as system power in a small amount and used as charging power for charging the battery 20 in a large amount. When the system is under a high workload (High workload), on the other hand, the power supplied from the AC adapter 30 is used as system power in an increasing amount, and the charging power for charging the battery 20 decreases. Thus, in the conventional charging control, the charging power of the battery 20 changes according to variation in system load, so that charging efficiency may decrease as a result of deviating from the optimal range (Sweet spot) where power conversion efficiency is high.

In view of this, in this embodiment, the charging current for charging the battery 20 is controlled to be within the optimal range (Sweet spot) where power conversion efficiency is high, by monitoring the remaining capacity (for example, voltage) of the battery 20 and the system power value and also monitoring the power supplied from the AC adapter 30.

FIG. 4 is a diagram for explaining an example of charging current control according to this embodiment. The drawing illustrates the relationship among the respective power values (Power (W)) of power supplied from the AC adapter 30 (ADP Power), system power consumed by the system load (Psys), and charging power for charging the battery 20 (Battery charge), as in FIG. 3.

In the charging current control according to this embodiment, even when the system power varies with variation in the system load, the charging power of the battery 20 is not changed according to such variation, but the charging current for charging the battery 20 is controlled to be within the optimal range (Sweet spot) where power conversion efficiency is high. For example, as illustrated in FIG. 4, when the system is under a high workload (High workload), the amount of charging power is small because there is an upper limit to the power suppliable from the AC adapter 30. On the other hand, when the system load is small, such as during an idle state (System idle), even though there is a margin below the upper limit to the power suppliable from the AC adapter 30, the charging current is controlled to be within the optimal range (Sweet spot) where power conversion efficiency is high.

In other words, the information processing apparatus 10 performs control so that the sum of the value of system power (Psys) and the value of charging power corresponding to the charging current within the optimal range (Sweet spot) where power conversion efficiency is high will be equal to the value of power (the amount of power, i.e. electric energy) supplied from the AC adapter 30. In this way, the information processing apparatus 10 can efficiently charge the battery 20.

As an example, when this method is applied to charging up to 80% of a battery with a capacity of 57 Wh, power conversion efficiency is improved approximately from 91% to 95%. Thus, the energy required per charge is reduced from "(57 Wh × 0.8)/0.91 = 50.1 Wh" to "(57 Wh × 0.8)/0.95 = 48 Wh", resulting in an improvement of 2.1 Wh.

The structure of the information processing apparatus 10 according to this embodiment will be described in detail below.

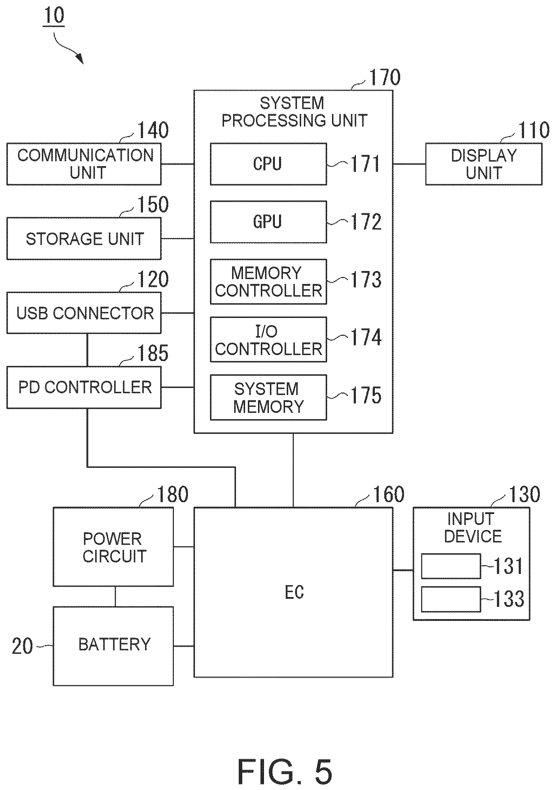

FIG. 5 is a schematic block diagram illustrating an example of the hardware structure of the information processing apparatus 10 according to this embodiment. The information processing apparatus 10 includes a display unit 110, a USB connector 120, an input device 130, a communication unit 140, a storage unit 150, an embedded controller (EC) 160, a system processing unit 170, a power circuit 180, and a PD controller 185.

The display unit 110 includes a liquid crystal display (LCD), an organic electroluminescence (EL) display, or the like. The display unit 110 displays images based on display data generated by system processing executed by the system processing unit 170.

The USB connector 120 is a connector for connecting peripherals using Universal Serial Bus (USB). For example, the USB connector 120 is a USB Type-C connector. Connecting the AC adapter 30 to the USB connector 120 enables power supply from the AC adapter 30. The information processing apparatus 10 may further include a USB Type-A connector as the USB connector 120.

The input device 130 is an input unit that receives input from a user, and includes, for example, a keyboard 131 and a touchpad 133. In response to operations performed on the keyboard 131 and the touchpad 133, the input device 130 outputs operation signals indicating the operations to the EC 160.

The communication unit 140 is communicably connected to other apparatuses via a wireless or wired communication network, and performs transmission and reception of various types of data. For example, the communication unit 140 includes communication devices such as a wired LAN interface, e.g. Ethernet (registered trademark), and a wireless LAN interface, e.g. Wi-Fi (registered trademark). The communication unit 140 may also include a USB interface and/or a Bluetooth (registered trademark) interface.

The storage unit 150 includes storage media such as a hard disk drive (HDD), a solid state drive (SSD), a random access memory (RAM), and a read only memory (ROM). The HDD or SSD stores various programs such as an OS, device drivers, and applications, and various types of data acquired through program operations.

The EC 160 is a microcomputer including a CPU, a RAM, a ROM, and an input-output (I/O) logic circuit. The CPU in the EC 160 reads a control program stored in advance in the ROM and executes the read control program to achieve its functions. For example, the EC 160 operates independently of the system processing unit 170, and gives instructions for transitions in the operating state of the system (e.g. startup, transition to standby) and manages the operating state. Moreover, the EC 160 is connected to the input device 130 and the power circuit 180. The EC 160 transmits, to the system processing unit 170 and the like, operation information corresponding to the user's operation performed on the input device 130.

The EC 160 also communicates with the power circuit 180 to acquire information of the state (remaining capacity, voltage, etc.) of the battery 20 from the power circuit 180 and perform charging control when the power circuit 180 charges the battery 20 using power supplied from the AC adapter 30. The EC 160 also outputs, for example, control signals for controlling the supply of system power according to the operating state of the system to the power circuit 180.

The power circuit 180 generates power supplied to each component of the information processing apparatus 10, based on power supplied from the AC adapter 30 or the battery 20. For example, the power circuit 180 includes a DC/DC converter and the like, and converts the voltage of power supplied from the AC adapter 30 or the battery 20 into a specified voltage to generate system power supplied to the system processing unit 170 and the like. The power circuit 180 also includes a charging circuit, and generates charging power supplied to the battery 20 based on power supplied from the AC adapter 30.

The PD controller 185 executes control conforming to USB Power Delivery (PD). When the AC adapter 30 is connected to the USB connector 120, the PD controller 185 manages the external power supply function for power supplied via the VBUS (power line) terminal of USB. Moreover, for example, the PD controller 185 also determines whether the AC adapter 30 is connected to the USB connector 120, and controls the amount of power supplied from the AC adapter 30.

The system processing unit 170 includes a CPU 171, a graphic processing unit (GPU) 172, a memory controller 173, an input-output (I/O) controller 174, and a system memory 175. Through system processing by an operating system (OS), the system processing unit 170 can execute processing of various application software on the OS. The CPU 171 and the GPU 172 are also collectively referred to as processors.

The CPU 171 controls the operating state of the system, such as startup or transition to a standby state (sleep), based on instruction information from the EC 160. For example, in the case where the operating state of the system is standby and instruction information for startup is input from the EC 160 in response to the user's operation, the CPU 171 transitions the system from the standby state to the normal operating state. For example, at startup, when power is supplied from the power circuit 180 and instruction information for startup is input from the EC 160, the CPU 171 begins a startup process. In the startup process, the CPU 171 detects and initializes the minimum necessary devices such as the system memory 175 and the storage unit 150 (pre-boot). The CPU 171 loads system firmware from the storage unit 150 into the system memory 175, and detects and initializes other devices such as the communication unit 140 and the display unit 110 (post-processing). The initialization includes processing such as setting initial parameters. During a transition (resume) from the standby state (sleep) to the normal operating state, part of the post-processing may be omitted. After the startup process is completed, the CPU 171 begins execution of system processing by the OS.

The GPU 172 is connected to the display unit 110. The GPU 172 performs image processing to generate display data under control of the CPU 171. The GPU 172 outputs the generated display data to the display unit 110. The CPU 171 and the GPU 172 may be integrally formed as one core, or formed as separate cores to share the load. The number of processors is not limited to one, and may be two or more.

The memory controller 173 controls reading and writing of data from and to the system memory 175, the storage unit 150, and the like by the CPU 171 and the GPU 172.

The I/O controller 174 controls input and output of data to and from the communication unit 140, the display unit 110, and the EC 160.

The system memory 175 is used as a loading region for programs executed by processors and a work region for writing processing data.

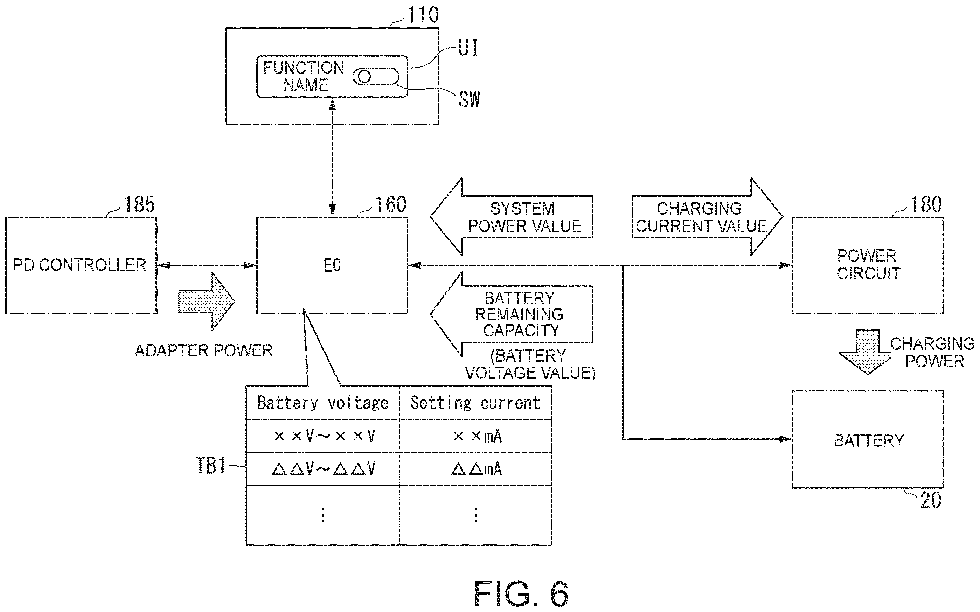

Next, a structure related to charging control in the information processing apparatus 10 will be described in detail with reference to FIG. 6. In FIG. 6, the components corresponding to the respective parts in FIG. 5 are given the same reference symbols.

FIG. 6 is a block diagram illustrating an example of the structure related to charging control in the information processing apparatus 10 according to this embodiment.

The EC 160 monitors the value of system power (system power value) supplied to the system load and the remaining capacity of the battery 20 (battery voltage value), when charging the battery 20. For example, the EC 160 acquires information of the system power value from the power circuit 180, and acquires information of the battery voltage value from the battery 20.

The EC 160 includes a charging control table TB1 in which a plurality of battery voltage values (Battery voltage) depending on the degree of charging (remaining capacity) of the battery 20 and setting values of charging current (Setting current) are associated with each other. A setting value of charging current for each battery voltage value is a target value of charging current with high power conversion efficiency. By multiplying each battery voltage value and a setting value of charging current associated with the battery voltage value, it is possible to calculate charging power with high power conversion efficiency when charging the battery 20. Thus, in the charging control table TB1, a charging power value with high power conversion efficiency is predetermined for each battery voltage value.

In the charging control table TB1, as the plurality of battery voltage values depending on the degree of charging (remaining capacity) of the battery 20, battery voltage value ranges obtained by dividing the remaining capacity range from 0 (no remaining charge) to full charge into a plurality of sections are set. Here, the range from 0 to full charge may be divided by any number.

Having acquired the information of the system power value and the information of the battery voltage value, the EC 160 instructs (i.e. notifies) the PD controller 185 of the amount of adapter power supplied from the AC adapter 30 based on the system power value and the charging power predetermined according to the battery voltage value. Here, the value of charging power predetermined according to the battery voltage value is calculated based on the setting value (target value) of charging current preset for each of the plurality of battery voltage values in the charging control table TB1 as mentioned above.

For example, the EC 160 instructs the PD controller 185 of the amount of power supplied from the AC adapter 30 based on the sum of the system power value and the charging power value predetermined according to the battery voltage value, as described with reference to FIG. 4.

In the case where the sum of the system power value and the charging power value predetermined according to the battery voltage value exceeds the maximum amount of power suppliable from the AC adapter 30, the EC 160 instructs the PD controller 185 to cause the amount of power supplied from the AC adapter 30 to be the maximum amount.

The PD controller 185 controls the power supplied from the AC adapter 30 according to the instruction from the EC 160. In this way, the EC 160 controls the current value for charging the battery 20 (that is, controls the charging power).

Thus, in the charging control according to this embodiment, the system power value and the battery voltage value (battery remaining capacity) are monitored to control the current value for charging the battery 20. This charging control enables more efficient charging than conventional charging control, and accordingly is hereinafter referred to as a "high-efficiency charging mode." The conventional charging control that controls the current value for charging the battery 20 by monitoring the battery voltage value (battery remaining capacity) without using the system power value is hereinafter referred to as a "normal charging mode."

The EC 160 switches between the normal charging mode and the high-efficiency charging mode based on the user's operation on a user interface (UI). For example, the system processing unit 170 executes a specific application program to cause the display unit 110 to display a UI for receiving an operation of switching the charging mode. The UI allows, for example, switching between enabling (Enable) or disabling (Disable) the function of performing charging control in the high-efficiency charging mode, and is displayed as an icon including the function name and a switch SW for switching between Enable and Disable.

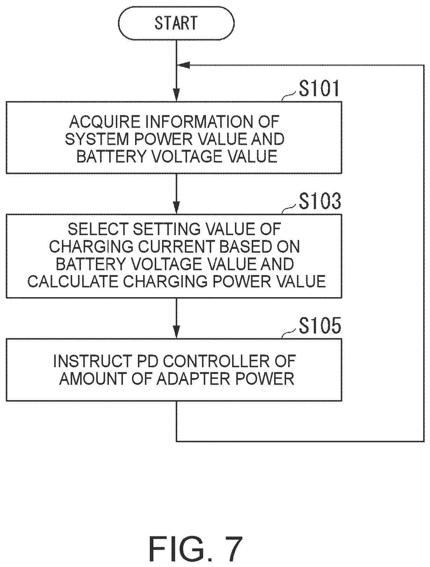

FIG. 7 is a flowchart illustrating an example of the charging control process in the high-efficiency charging mode according to this embodiment.

(Step S101) The EC 160 acquires information of the system power value from the power circuit 180. The EC 160 also acquires information of the battery voltage value from the battery 20. The process then proceeds to step S103.

(Step S103) The EC 160 selects the setting value (target value) of charging current based on the battery voltage value acquired in step S101 with reference to the charging control table TB1 (see FIG. 6), and calculates the charging power value based on the battery voltage value and the setting value (target value) of charging current. The process then proceeds to step S105.

(Step S105) The EC 160 calculates the amount of adapter power supplied from the AC adapter 30 based on the sum of the system power value acquired in step S101 and the charging power value calculated in step S103, and instructs the PD controller 185 of the amount of adapter power.

The PD controller 185 controls the power supplied from the AC adapter 30 according to the instruction from the EC 160. The EC 160 thus controls the current value for charging the battery 20 (that is, controls the charging power).

As described above, the information processing apparatus 10 according to this embodiment includes the PD controller 185 (an example of a power supply control unit), the power circuit 180 (an example of a power unit), and the EC 160 (an example of a processor). The PD controller 185 controls the amount of power supplied from the AC adapter 30. The power circuit 180 generates power supplied to the battery 20 (an example of a secondary battery) and the system load based on the power supplied from the AC adapter 30. The EC 160 monitors the value of system power supplied to the system load and the voltage value of the battery 20 when charging the battery 20. The EC 160 instructs the PD controller 185 of the amount of power supplied from the AC adapter 30 based on the system power value and the charging power value predetermined according to the battery voltage value of the battery 20, to control the current value for charging the battery 20.

Thus, the information processing apparatus 10 is capable of such control that charges the battery 20 with a charging current achieving high power conversion efficiency even when the system load varies, so that the battery 20 can be charged efficiently. By efficiently charging the battery 20, the information processing apparatus 10 can reduce the amount of heat generation and suppress unnecessary power requests to the AC adapter 30. An environmentally friendly product can therefore be provided.

Here, a target value of charging current is preset for each of a plurality of battery voltage values depending on the degree of charging of the battery 20 (see FIG. 4). The charging power value predetermined according to the battery voltage value of the battery 20 is calculated based on the target value of charging current preset for each of the plurality of battery voltage values.

Thus, when charging the battery 20, the information processing apparatus 10 changes the charging current to be efficient in response to changes in the remaining capacity of the battery 20. This enables efficient charging of the battery 20.

For example, when charging the battery 20, the EC 160 instructs the PD controller 185 of the amount of power supplied from the AC adapter 30 based on the sum of the system power value and the charging power value predetermined according to the battery voltage value.

Thus, even when the system load varies, the information processing apparatus 10 controls the amount of power supplied from the AC adapter 30 in response to the variation of the system load (variation of the system power value) so as to enhance the efficiency of the charging current for charging the battery 20. This enables efficient charging of the battery 20.

In the case where the sum of the system power value and the charging power value predetermined according to the battery voltage value exceeds the maximum amount of power suppliable from the AC adapter 30, the EC 160 instructs the PD controller 185 to cause the amount of power supplied from the AC adapter 30 to be the maximum amount.

Thus, even in the case where the system load is large, the information processing apparatus 10 can charge the battery 20 within the range of the amount of power suppliable from the AC adapter 30.

The EC 160 switches between the high-efficiency charging mode (an example of a first charging mode) in which the current value for charging the battery 20 is controlled by monitoring the system power value and the battery voltage value of the battery 20 and the normal charging mode (an example of a second charging mode) in which the current value for charging the battery 20 is controlled by monitoring the battery voltage value of the battery 20 without using the system power value, based on the user's operation on a UI that allows switching between the high-efficiency charging mode and the normal charging mode.

Thus, the information processing apparatus 10 allows the user to easily select whether the battery 20 is charged with an emphasis on efficiency or with an emphasis on short charging time.

The system load includes a load of processing executed by an OS or a program running on the OS.

Thus, the information processing apparatus 10 is capable of such control that charges the battery 20 with a charging current achieving high power conversion efficiency even when the load of processing executed by the OS or by the program running on the OS varies by the user. This enables efficient charging of the battery 20.

A charging method for the battery 20 in the information processing apparatus 10 according to this embodiment includes the following steps executed by the EC 160: when charging the battery 20, monitoring the value of system power supplied to the system load and the voltage value of the battery 20; and instructing the PD controller 185 of the amount of power supplied from the AC adapter 30 based on the system power value and the charging power value predetermined according to the battery voltage value of the battery 20, to control the current value for charging the battery 20.

Thus, the charging method for the battery 20 in the information processing apparatus 10 is capable of such control that charges the battery 20 with a charging current achieving high power conversion efficiency even when the system load varies, so that the battery 20 can be charged efficiently. By efficiently charging the battery 20, the charging method for the battery 20 in the information processing apparatus 10 can reduce the amount of heat generation and suppress unnecessary power requests to the AC adapter 30. An environmentally friendly product can therefore be provided.

While the embodiment of the present invention has been described in detail above with reference to the drawings, the specific structures are not limited to the above embodiment, and designs and the like without departing from the scope of the present invention are also included. For example, the structures described in the above embodiment may be freely combined.

Although the above embodiment describes an example in which the AC adapter 30 is connected to the information processing apparatus 10 via the USB connector 120 (USB Type-C connector), the connection method is not limited to such.

The above-described information processing apparatus 10 includes a computer system. Processes in the components in the above-described information processing apparatus 10 may be performed by recording a program for implementing the functions of the components in the above-described information processing apparatus 10 on a computer-readable recording medium and causing a computer system to read and execute the program recorded on the recording medium. Herein, the expression "causing a computer system to read and execute the program recorded on the recording medium" includes installing the program in the computer system. The term "computer system" herein includes an OS and hardware such as peripherals. The "computer system" may include a plurality of computer apparatuses connected via a network such as the Internet, a WAN, a LAN, or a communication line such as a dedicated line. The "computer-readable recording medium" refers to a portable medium such as a flexible disk, a magneto-optical disc, a ROM, or a CD-ROM, or a storage device such as a hard disk embedded in the computer system. Thus, the recording medium storing the program may be a non-transitory recording medium such as a CD-ROM.

The recording medium includes a recording medium internally or externally provided so as to be accessible from a distribution server for distributing the program. A configuration in which the program is divided into a plurality of parts and the components in the information processing apparatus 10 combine the parts after the parts are downloaded at different timings may be adopted, and distribution servers for distributing the parts into which the program is divided may be different. The "computer-readable recording medium" includes a medium that holds the program for a certain period of time, such as a volatile memory (RAM) inside a computer system serving as a server or a client when the program is transmitted via a network. The program may be a program for implementing part of the above-described functions. The program may be a differential file (differential program) that can implement the above-described functions in combination with a program already recorded in the computer system.

Some or all of the functions included in the information processing apparatus 10 according to the above embodiment may be implemented as an integrated circuit such as large scale integration (LSI). The above-described functions may be individually formed as a processor, or some or all thereof may be integrated into a processor. The method of forming an integrated circuit is not limited to LSI, and may be implemented by a dedicated circuit or a general-purpose processor. If integrated circuit technology that can replace LSI emerges as a result of the advancement of semiconductor technology, an integrated circuit based on such technology may be used.

### Description of Symbols

- 10: information processing apparatus
- 20: battery
- 30: AC adapter
- 110: display unit
- 120: USB connector
- 130: input device
- 131: keyboard
- 133: touchpad
- 140: communication unit
- 150: storage unit
- 160: EC
- 170: system processing unit
- 171: CPU
- 172: GPU
- 173: memory controller
- 174: I/O controller
- 175: system memory
- 180: power circuit
- 185: PD controller

## Claims

1. An information processing apparatus comprising:
a power supply control unit configured to control an amount of power supplied from an AC adapter;
a power unit configured to generate power supplied to a secondary battery and a system load based on the power supplied from the AC adapter; and
a processor configured to, when charging the secondary battery, monitor a value of system power supplied to the system load and a voltage value of the secondary battery, and instruct the power supply control unit of the amount of power supplied from the AC adapter based on the value of the system power and a value of charging power predetermined according to the voltage value of the secondary battery, to control a current value for charging the secondary battery.

2. The information processing apparatus according to claim 1, wherein a target value of charging current is preset for each of a plurality of voltage values depending on a degree of charging of the secondary battery, and
wherein the value of the charging power predetermined according to the voltage value of the secondary battery is calculated based on the target value of the charging current preset for each of the plurality of voltage values.

3. The information processing apparatus according to claim 1 or claim 2, wherein when charging the secondary battery, the processor is configured to instruct the power supply control unit of the amount of power supplied from the AC adapter based on a sum of the value of the system power and the value of the charging power predetermined according to the voltage value of the secondary battery.

4. The information processing apparatus according to claim 3, wherein in a case where the sum of the value of the system power and the value of the charging power predetermined according to the voltage value of the secondary battery exceeds a maximum amount of power suppliable from the AC adapter, the processor is configured to instruct the power supply control unit to cause the amount of power supplied from the AC adapter to be the maximum amount.

5. The information processing apparatus according to any preceding claim, wherein the processor is configured to switch between a first charging mode in which the current value for charging the secondary battery is controlled by monitoring the value of the system power and the voltage value of the secondary battery and a second charging mode in which the current value for charging the secondary battery is controlled by monitoring the voltage value of the secondary battery without using the value of the system power, based on an operation of a user on a user interface, UI, that allows switching between the first charging mode and the second charging mode.

6. The information processing apparatus according to any preceding claim, wherein the system load includes a load of processing executed by an operating system, OS, or a program running on the OS.

7. A charging method for a secondary battery in an information processing apparatus that includes: a power supply control unit configured to control an amount of power supplied from an AC adapter; and a power unit configured to generate power supplied to the secondary battery and a system load based on the power supplied from the AC adapter, the charging method comprising the following steps executable by a processor:
when charging the secondary battery, monitoring a value of system power supplied to the system load and a voltage value of the secondary battery; and
instructing the power supply control unit of the amount of power supplied from the AC adapter based on the value of the system power and a value of charging power predetermined according to the voltage value of the secondary battery, to control a current value for charging the secondary battery.

8. The charging method according to claim 7, wherein a target value of charging current is preset for each of a plurality of voltage values depending on a degree of charging of the secondary battery, and
calculating the value of the charging power predetermined according to the voltage value of the secondary battery based on the target value of the charging current preset for each of the plurality of voltage values.

9. The charging method according to claim 7 or claim 8, wherein when charging the secondary battery, instructing the power supply control unit of the amount of power supplied from the AC adapter based on a sum of the value of the system power and the value of the charging power predetermined according to the voltage value of the secondary battery.

10. The charging method according to claim 9,
wherein in a case where the sum of the value of the system power and the value of the charging power predetermined according to the voltage value of the secondary battery exceeds a maximum amount of power suppliable from the AC adapter, instructing the power supply control unit to cause the amount of power supplied from the AC adapter to be the maximum amount.

11. The charging method according to any one of claims 7 to 10, switching between a first charging mode in which the current value for charging the secondary battery is controlled by monitoring the value of the system power and the voltage value of the secondary battery and a second charging mode in which the current value for charging the secondary battery is controlled by monitoring the voltage value of the secondary battery without using the value of the system power, based on an operation of a user on a user interface, UI, that allows switching between the first charging mode and the second charging mode.

12. The charging method according to any one of claims 7 to 11, wherein the system load includes a load of processing executed by an operating system, OS, or a program running on the OS.
